(19) Europäisches Patentamt
European Patent Office
Office européen des brevets

(11) EP 3 553 594 B1

(12) **EUROPEAN PATENT SPECIFICATION**

(45) Date of publication and mention
of the grant of the patent:
**28.09.2022 Bulletin 2022/39**

(21) Application number: **18305436.0**

(22) Date of filing: **11.04.2018**

(51) International Patent Classification (IPC):
**G02C 7/06** $^{(2006.01)}$ **G02C 7/02** $^{(2006.01)}$

(52) Cooperative Patent Classification (CPC):
**G02C 7/061; G02C 7/022;** G02C 2202/24

(54) **LENS ELEMENT**

**LINSENELEMENT**

**ÉLÉMENT DE LENTILLE**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**16.10.2019 Bulletin 2019/42**

(73) Proprietor: **Essilor International
94220 Charenton-le-Pont (FR)**

(72) Inventors:
• **GUILLOT, Matthieu
94220 Charenton-Le-Pont (FR)**

• **DROBE, Bjorn
39346 Singapore (SG)**

(74) Representative: **Cabinet Novitech
188 Grande rue Charles de Gaulle
94130 Nogent-sur-Marne (FR)**

(56) References cited:
EP-A1- 2 762 953    EP-A1- 3 112 925
US-A1- 2010 036 489    US-A1- 2014 313 475
US-A1- 2015 316 788    US-A1- 2016 306 192
US-A1- 2017 131 567    US-A1- 2017 184 875

**Description**

TECHNICAL FIELD

The invention relates to a lens element intended to be worn in front of an eye of a person to suppress progression of abnormal refractions of the eye such as myopia or hyperopia.

BACKGROUND OF THE INVENTION

Myopia of an eye is characterized by the fact that the eye focuses distant objects in front of its retina. Myopia is usually corrected using a concave lens and hypermetropia is usually corrected using a convex lens.

It has been observed that some individuals when corrected using conventional single vision optical lenses, in particular children, focus inaccurately when they observe an object which is situated at a short distance away, that is to say, in near vision conditions. Because of this focusing defect on the part of a myopic child which is corrected for his far vision, the image of an object close by is also formed behind his retina, even in the foveal area.

Such focusing defect may have an impact on the progression of myopia of such individuals. One may observe that for most of said individual the myopia defect tends to increase over time.

Therefore, it appears that there is a need for a lens element that would suppress or at least slow down progression of abnormal refractions of the eye such as myopia or hyperopia.

Lenses for slowing down progression of myopia can be found for example in patent documents US 2017/131567, US 2017/184875 and EP 3112925.

SUMMARY OF THE INVENTION

To this end, the invention proposes a lens element intended to be worn in front of an eye of a person as defined in claim 1.

Advantageously, having optical elements configured so that along at least one section of the lens the mean sphere of optical elements increases from a point of said section towards the peripheral part of said section allows increasing the defocus of the light rays in front the retina in case of myopia or behind the retina in case of hypermetropia.

In other words, the inventors have observed that having optical elements configured so that along at least one section of the lens the mean sphere of optical elements increases from a point of said section towards the peripheral part of said section helps slow down the progression of abnormal refraction of the eye such as myopia or hyperopia.

The solution of the invention also helps improve the aesthetics of the lens and helps compensate accommodative lag.

According to further embodiments which can be considered alone or in combination:

- the optical elements are configured so that along at least one section of the lens the mean cylinder of optical elements increases from a point of said section towards the peripheral part of said section; and/or
- the optical elements are configured so that along the at least one section of the lens the mean sphere and/or the mean cylinder of optical elements increases from the center of said section towards the peripheral part of said section; and/or
- the refraction area comprises an optical center and optical elements are configured so that along any section passing through the optical center of the lens the mean sphere and the mean cylinder of the optical elements increases from the optical center towards the peripheral part of the lens; and/or
- the refraction area comprises a far vision reference point, a near vision reference, and a meridian line joining the far and near vision reference points, the optical elements are configured so that in standard wearing conditions along any horizontal section of the lens the mean sphere and/or the mean cylinder of the optical elements increases from the intersection of said horizontal section with the meridian line towards the peripheral part of the lens; and/or
- the mean sphere and/or the mean cylinder increase function along the sections are different depending on the position of said section along the meridian line; and/or
- the mean sphere and/or the mean cylinder increase function along the sections are unsymmetrical; and/or
- the optical elements are configured so that in standard wearing condition the at least one section is a horizontal section; and/or
- the mean sphere and/or the mean cylinder of optical elements increases from a first point of said section towards the peripheral part of said section and decreases from a second point of said section towards the peripheral part of said section, the second point being closer to the peripheral part of said section than the first point; and/or
- the mean sphere and/or the mean cylinder increase function along the at least one horizontal section is a Gaussian function; and/or

- the mean sphere and/or the mean cylinder increase function along the at least one horizontal section is a Quadratic function; and/or
- at least part, for example all, of the optical elements are located on the front surface of the ophthalmic lens; and/or
- at least part, for example all, of the optical elements are located on the back surface of the ophthalmic lens; and/or
- at least part, for example all, of the optical elements are located between the front and the back surfaces of the ophthalmic lens; and/or
- the least three optical elements are non-contiguous; and/or
- the refraction area has a first refractive power based on a prescription for correcting an abnormal refraction of said eye of the person and a second refractive power different from the first refractive power; and/or
- the difference between the first refractive power and the second refractive power is greater than or equal to 0.5D; and/or
- the refraction area is formed as the area other than the areas formed as the plurality of optical elements; and/or
- at least one, for example all of the, optical element has an optical function of not focusing an image on the retina of the eye so as to slow down the progression of the abnormal refraction of the eye; and/or
- in the refraction area the refractive power has a continuous variation; and/or
- in the refraction area the refractive power has at least one discontinuity; and/or
- the lens element is divided in five complementary zones, a central zone having a power being equal to the first refractive power and four quadrants at 45°, at least one of the quadrant having a refractive power equal to the second refractive power; and/or
- the central zone comprises a framing reference point that faces the pupil of the person gazing straight ahead in standard wearing conditions and has a diameter greater than 4mm and smaller than 20mm; and/or
- at least lower part quadrant has the second refractive power; and/or
- the refraction area has a progressive addition dioptric function; and/or
- at least one of the temporal and nasal quadrant has the second refractive power; and/or
- the four quadrants have a concentric power progression; and/or
- at least one of the optical elements is a multifocal refractive micro-lens; and/or
- the at least one multifocal refractive micro-lens comprises an aspherical surface, with or without any rotational symmetry; and/or
- at least one of the optical elements is a toric refractive micro-lens; and/or
- the at least one multifocal refractive micro-lens comprises a toric surface; and/or
- at least one of the optical elements is made of a birefringent material; and/or
- at least one of the optical elements is a diffractive lens; and/or
- the at least one diffractive lens comprises a metasurface structure; and/or
- at least one optical elements has a shape configured so as to create a caustic in front of the retina of the eye of the person; and/or
- at least one optical element is a multifocal binary component; and/or
- at least one optical element is a pixelated lens; and/or
- at least one optical element is a $\pi$-Fresnel lens; and/or
- at least part, for example all, of the optical elements are located on the front surface of the ophthalmic lens; and/or
- at least part, for example all, optical functions comprise high order optical aberrations; and/or
- the lens element comprises an ophthalmic lens bearing the refraction area and a clip-on bearing the plurality of at least three optical elements adapted to be removably attached to the ophthalmic lens when the lens element is worn.

BRIEF DESCRIPTION OF THE DRAWINGS

Non-limiting embodiments of the invention will now be described with reference to the accompanying drawing wherein:

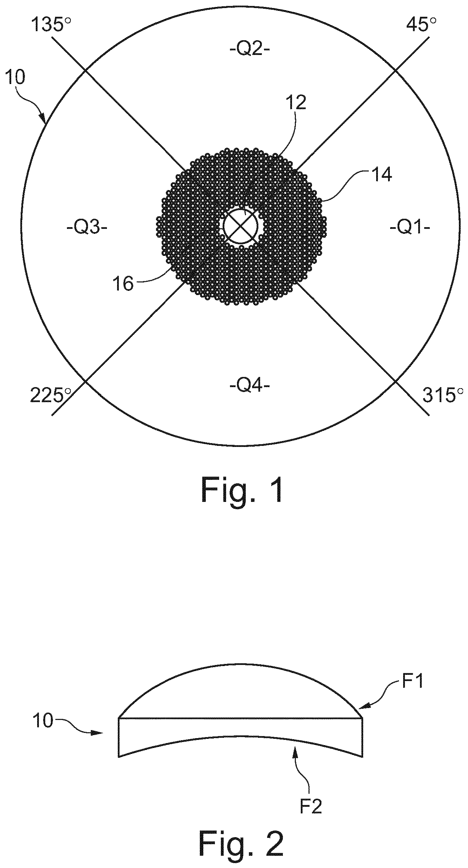

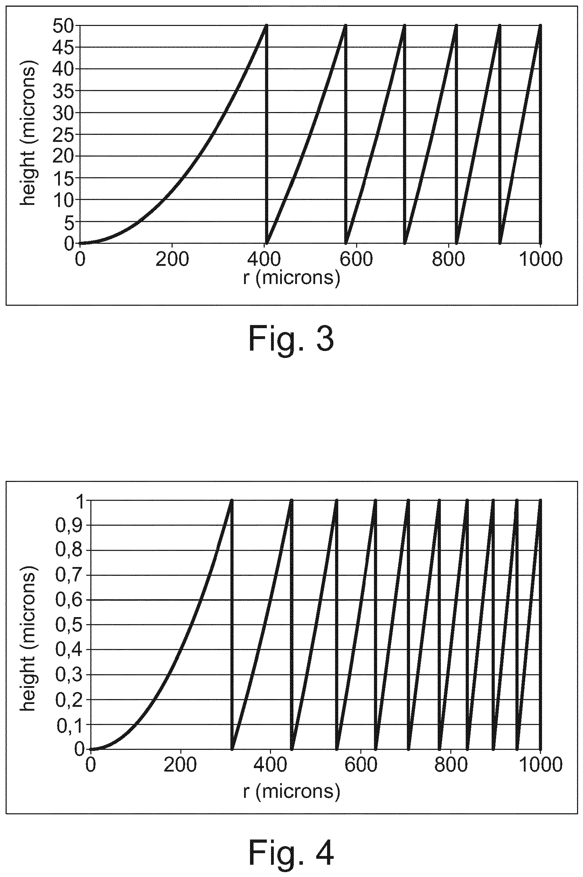

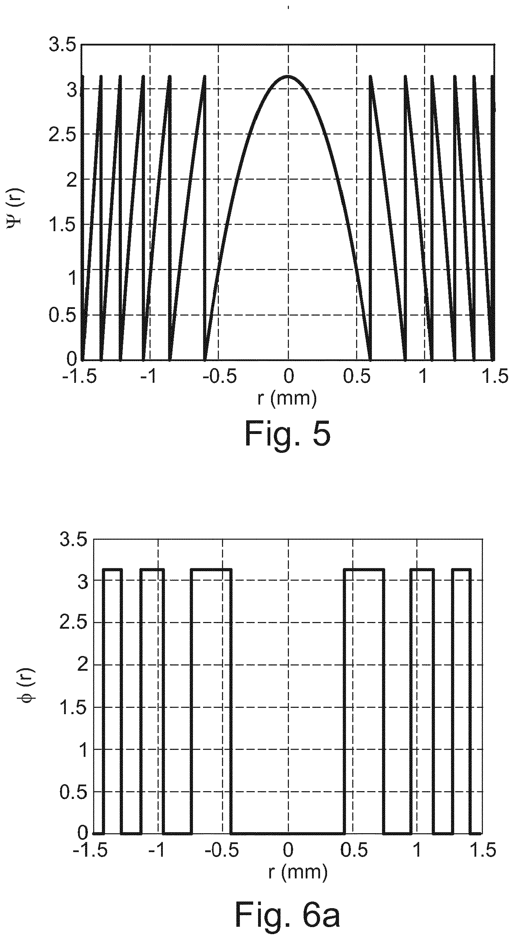

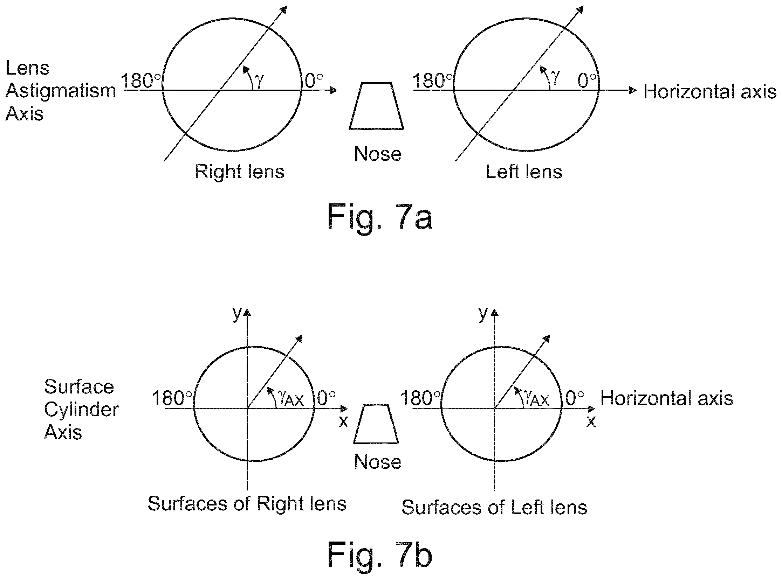

 o figure 1 is a plan view of a lens element according to the invention;
 o figure 2 is a general profile view of a lens element according to the invention;
 o figure 3 represents an example of a Fresnel height profile;
 o figure 4 represents an example of a diffractive lens radial profile;
 o figure 5 illustrates a $\pi$-Fresnel lens profile;
 o figures 6a to 6c illustrate a binary lens embodiment of the invention;
 o figure 7a illustrates the astigmatism axis $\gamma$ of a lens in the TABO convention; and
 o figure 7b illustrates the cylinder axis $\gamma_{AX}$ in a convention used to characterize an aspherical surface.

Elements in the figures are illustrated for simplicity and clarity and have not necessarily been drawn to scale.

For example, the dimensions of some of the elements in the figure may be exaggerated relative to other elements to help to improve the understanding of the embodiments of the present invention.

DETAILED DESCRIPTION OF EMBODIMENTS OF THE INVENTION

The invention relates to a lens element intended to be worn in front of an eye of a person.

In the reminder of the description, terms like « up », « bottom », « horizontal », « vertical », « above », « below », « front », « rear » or other words indicating relative position may be used. These terms are to be understood in the wearing conditions of the lens element.

In the context of the present invention, the term "lens element" can refer to an uncut optical lens or a spectacle optical lens edged to fit a specific spectacle frame or an ophthalmic lens and an optical device adapted to be positioned on the ophthalmic lens. The optical device may be positioned on the front or back surface of the ophthalmic lens. The optical device may be an optical patch. The optical device may be adapted to be removably positioned on the ophthalmic lens for example a clip configured to be clipped on a spectacle frame comprising the ophthalmic lens.

A lens element 10 according to the invention is adapted for a person and intended to be worn in front of an eye of said person.

As represented on figure 1, a lens element 10 according to the invention comprises:

-   a refraction area 12, and
-   a plurality of at least three optical elements 14.

The refraction area 12 has a refractive power P1 based on the prescription of the eye of the person for which the lens element is adapted. The prescription is adapted for correcting the abnormal refraction of the eye of the person.

The term "prescription" is to be understood to mean a set of optical characteristics of optical power, of astigmatism, of prismatic deviation, determined by an ophthalmologist or optometrist in order to correct the vision defects of the eye, for example by means of a lens positioned in front of his eye. For example, the prescription for a myopic eye comprises the values of optical power and of astigmatism with an axis for the distance vision.

The refraction area is preferably formed as the area other than the areas formed as the plurality of optical elements. In other words, the refraction area is the complementary area to the areas formed by the plurality of optical elements.

According to an embodiment of the invention, the refraction area 12 further comprises at least a second refractive power P2 different from the refractive power P1.

In the sense of the invention, the two refractive powers are considered different when the difference between the two refractive powers is greater than or equal to 0.5 D.

When the abnormal refraction of the eye of the person corresponds to myopia the second refractive power is greater than the refractive power P1.

When the abnormal refraction of the eye of the person corresponds to hypermetropia, the second refractive power is smaller than the refractive power P1.

The refraction area may have a continuous variation of refractive power. For example, the refraction area may have a progressive addition design.

The optical design of the refraction area may comprise

-   a fitting cross where the optical power is negative,
-   a first zone extending in the temporal side of the refractive are when the lens element is being worn by a wearer. In the first zone, the optical power increases when moving towards the temporal side, and over the nasal side of the lens, the optical power of the ophthalmic lens is substantially the same as at the fitting cross.

Such optical design is disclosed in greater details in WO2016/107919.

Alternatively, the refractive power in the refraction area may comprise at least one discontinuity.

As represented on figure 1, the lens element may be divided in five complementary zones, a central zone 16 having a power being equal to the refractive power corresponding to the prescription and four quadrants Q1, Q2, Q3, Q4 at 45°, at least one of the quadrant having at least a point where the refractive power is equal to the second refractive power.

In the sense of the invention the "quadrants at 45°" are to be understood as equal angular quadrant of 90° oriented in the directions 45°/225° and 135°/315° according to the TABO convention as illustrated on figure 1.

Preferably, the central zone 16 comprises a framing reference point that faces the pupil of the person gazing straight ahead in standard wearing conditions and has a diameter greater than or equal to 4 mm and smaller than or equal to 22 mm.

The wearing conditions are to be understood as the position of the lens element with relation to the eye of a wearer, for example defined by a pantoscopic angle, a Cornea to lens distance, a Pupil-cornea distance, a center of rotation of the eye (CRE) to pupil distance, a CRE to lens distance and a wrap angle.

The Cornea to lens distance is the distance along the visual axis of the eye in the primary position (usually taken to be the horizontal) between the cornea and the back surface of the lens; for example equal to 12mm.

The Pupil-cornea distance is the distance along the visual axis of the eye between its pupil and cornea; usually equal to 2mm.

The CRE to pupil distance is the distance along the visual axis of the eye between its center of rotation (CRE) and cornea; for example equal to 11.5mm.

The CRE to lens distance is the distance along the visual axis of the eye in the primary position (usually taken to be the horizontal) between the CRE of the eye and the back surface of the lens, for example equal to 25.5mm.

The pantoscopic angle is the angle in the vertical plane, at the intersection between the back surface of the lens and the visual axis of the eye in the primary position (usually taken to be the horizontal), between the normal to the back surface of the lens and the visual axis of the eye in the primary position; for example equal to -8°.

The wrap angle is the angle in the horizontal plane, at the intersection between the back surface of the lens and the visual axis of the eye in the primary position (usually taken to be the horizontal), between the normal to the back surface of the lens and the visual axis of the eye in the primary position for example equal to 0°.

An example of standard wearering condition may be defined by a pantoscopic angle of -8°, a Cornea to lens distance of 12 mm, a Pupil-cornea distance of 2 mm, a CRE to pupil distance of 11.5 mm, a CRE to lens distance of 25.5 mm and a wrap angle of 0°.

According to an embodiment of the invention at least the lower part quadrant Q4 has a second refractive power different from the refractive power corresponding to the prescription for correcting the abnormal refraction.

For example, the refraction area has a progressive addition dioptric function. The progressive addition dioptric function may extend between the upper part quadrant Q2 and the lower part quadrant Q4.

Advantageously, such configuration allows compensation of accommodative lag when the person looks for example at near vision distances thanks to the addition of the lens.

According to an embodiment, at least one of the temporal Q3 and nasal Q1 quadrant has a second refractive power different from the refractive power corresponding to the prescription of the person. For example, the temporal Q3 quadrant has a variation of power with the eccentricity of the lens.

Advantageously, such configuration increases the efficiency of the abnormal refraction control in peripheral vision with even more effect in horizontal axis.

According to an embodiment, the four quadrants Q1, Q2, Q3 and Q4 have a concentric power progression.

The optical elements are configured so that at least along one section of the lens the mean sphere of the optical elements increases from a point of said section towards the peripheral of said section.

According to an embodiment of the invention the optical elements are configured so that at least along one section of the lens, for example at least the same section as the one along which the mean sphere of the optical elements increases, the mean cylinder increases from a point of said section, for example the same point as for the mean sphere, towards the peripheral part of said section.

As is known, a minimum curvature $CURV_{min}$ is defined at any point on an aspherical surface by the formula:

$$CURV_{min} = \frac{1}{R_{max}}$$

where $R_{max}$ is the local maximum radius of curvature, expressed in meters and $CURV_{min}$ is expressed in dioptres.

Similarly, a maximum curvature $CURV_{max}$ can be defined at any point on an aspheric surface by the formula:

$$CURV_{max} = \frac{1}{R_{min}}$$

where $R_{min}$ is the local minimum radius of curvature, expressed in meters and $CURV_{max}$ is expressed in dioptres.

It can be noticed that when the surface is locally spherical, the local minimum radius of curvature $R_{min}$ and the local maximum radius of curvature $R_{max}$ are the same and, accordingly, the minimum and maximum curvatures $CURV_{min}$ and $CURV_{max}$ are also identical. When the surface is aspherical, the local minimum radius of curvature $R_{min}$ and the local maximum radius of curvature $R_{max}$ are different.

From these expressions of the minimum and maximum curvatures $CURV_{min}$ and $CURV_{max}$, the minimum and maximum spheres labeled SPHmin and SPHmax can be deduced according to the kind of surface considered.

When the surface considered is the object side surface (also referred to as the front surface), the expressions are the following:

$$SPH_{min} = (n-1) * CURV_{min} = \frac{n-1}{R_{max}} \quad , \text{and} \quad SPH_{min} = (n-1) * CURV_{min} = \frac{n-1}{R_{max}}$$

where n is the index of the constituent material of the lens.

If the surface considered is an eyeball side surface (also referred to as the back surface), the expressions are the following:

$$SPH_{min} = (1-n) * CURV_{min} = \frac{1-n}{R_{max}} \quad \text{and} \quad SPH_{max} = (1-n) * CURV_{max} = \frac{1-n}{R_{min}}$$

where n is the index of the constituent material of the lens.

As is well known, a mean sphere $SPH_{mean}$ at any point on an aspherical surface can also be defined by the formula:

$$SPH_{mean} = \frac{1}{2}(SPH_{min} + SPH_{max})$$

The expression of the mean sphere therefore depends on the surface considered:

if the surface is the object side surface,

$$SPH_{mean} = \frac{n-1}{2}\left(\frac{1}{R_{min}} + \frac{1}{R_{max}}\right)$$

if the surface is an eyeball side surface,

$$SPH_{mean} = \frac{1-n}{2}\left(\frac{1}{R_{min}} + \frac{1}{R_{max}}\right)$$

a cylinder CYL is also defined by the formula $CYL = |SPH_{max} - SPH_{min}|$.

The characteristics of any aspherical face of the lens may be expressed by the local mean spheres and cylinders. A surface can be considered as locally aspherical when the cylinder is at least 0.25 diopters.

For an aspherical surface, a local cylinder axis $\gamma_{AX}$ may further be defined. Figure 7a illustrates the astigmatism axis $\gamma$ as defined in the TABO convention and figure 7b illustrates the cylinder axis $\gamma_{AX}$ in a convention defined to characterize an aspherical surface.

The cylinder axis $\gamma_{AX}$ is the angle of the orientation of the maximum curvature $CURV_{max}$ with relation to a reference axis and in the chosen sense of rotation. In the above defined convention, the reference axis is horizontal (the angle of this reference axis is 0°) and the sense of rotation is counterclockwise for each eye, when looking at the wearer ($0°{\leq}\gamma_{AX}{\leq}180°$). An axis value for the cylinder axis $\gamma_{AX}$ of +45° therefore represents an axis oriented obliquely, which when looking at the wearer, extends from the quadrant located up on the right to the quadrant located down on the left.

As illustrated on figure 2, a lens element 10 according to the invention comprises an object side surface F1 formed as a convex curved surface toward an object side, and an eye side surface F2 formed as a concave surface having a different curvature than the curvature of the object side surface F1.

According to an embodiment of the invention, at least part, for example all, of the optical elements are located on the front surface of the lens element.

At least part, for example all, of the optical elements may be located on the back surface of the lens element.

At least part, for example all, of the optical elements may be located between the front and back surfaces of the lens element. For example, the lens element may comprise zones of different refractive index forming the optical elements.

According to the invention, every circular zone having a radius comprised between 2 and 4 mm comprising a geometrical center located at a distance of the optical center of the lens element greater or equal to said radius + 5mm, the ratio between the sum of areas of the parts of optical elements located inside said circular zone and the area of said circular zone is comprised between 20% and 70%.

According to the invention the optical elements are micro-lenses having a contour shape being inscribable in a circle having a diameter greater than or equal to 0.8 mm and smaller than or equal to 3.0 mm.

The optical elements may be configured so that along the at least one section of the lens the mean sphere and/or the mean cylinder of optical elements increases from the center of said section towards the peripheral part of said section.

According to an embodiment of the invention, the optical elements are configured so that in standard wearing condition the at least one section is a horizontal section.

The mean sphere and/or the mean cylinder may increase according to an increase function along the at least one horizontal section, the increase function being a Gaussian function. The Gaussian function may be different between the nasal and temporal part of the lens so as to take into account the dissymmetry of the retina of the person.

Alternatively, the mean sphere and/or the mean cylinder may increase according to an increase function along the at least one horizontal section, the increase function being a Quadratic function. The Quadratic function may be different between the nasal and temporal part of the lens so as to take into account the dissymmetry of the retina of the person.

According to an embodiment of the invention, the mean sphere and/or the mean cylinder of optical elements increases from a first point of said section towards the peripheral part of said section and decreases from a second point of said section towards the peripheral part of said section, the second point being closer to the peripheral part of said section than the first point.

Such embodiment is illustrated in table 1 that provides the mean sphere of optical elements according to their radial distance to the optical center of the lens element.

In the example of table 1, the optical elements are micro lens placed on a spherical front surface having a curvature of 329.5 mm and the lens element is made of an optical material having a refractive index of 1.591, the prescribed optical power of the wearer is of 6 D. The optical element is to be worn in standard wearing conditions and the retina of the wearer is considered as having a defocus of 0.8 D at an angle of 30°.

Table 1

| Distance to optical center (mm) | Mean sphere of optical element (D) |
|---|---|
| 0 | 1.992 |
| 5 | 2.467 |
| 7.5 | 2.806 |
| 10 | 3.024 |
| 15 | 2.998 |
| 20 | 2.485 |

As illustrated in table 1, starting close to the optical center of the lens element, the mean sphere of the optical elements increases towards the peripheral part of said section and then decreases towards the peripheral part of said section.

According to an embodiment of the invention, the refraction area comprises an optical center and optical elements are configured so that along any section passing through the optical center of the lens the mean sphere and the mean cylinder of the optical elements increases from the optical center towards the peripheral part of the lens.

For example, the optical elements may be regularly distributed along circles centered on the optical center of the refraction area.

The optical elements on the circle of diameter 10 mm and centered on the optical center of the refraction area may be micro lenses having a mean sphere of 2.75 D.

The optical elements on the circle of diameter 20 mm and centered on the optical center of the refraction area may be micro lenses having a mean sphere of 4.75 D.

The optical elements on the circle of diameter 30 mm and centered on the optical center of the refraction area may be micro lenses having a mean sphere of 5.5 D.

The optical elements on the circle of diameter 40 mm and centered on the optical center of the refraction area may be micro lenses having a mean sphere of 5.75 D.

The mean cylinder of the different micro lenses may be adjusted based on the shape of the retina of the person.

According to an embodiment of the invention, the refraction area comprises a far vision reference point, a near vision reference, and a meridian line joining the far and near vision reference points. For example, the refraction area may comprise a progressive addition lens design adapted to the prescription of the person or adapted to slow down the progression of the abnormal refraction of the eye of the person wearing the lens element.

The meridian line corresponds to the locus of the intersection of the main gaze direction with the surface of the lens.

Preferably, according to such embodiment, the optical elements are configured so that in standard wearing conditions along any horizontal section of the lens the mean sphere and/or the mean cylinder of the optical elements increases from the intersection of said horizontal section with the meridian line towards the peripheral part of the lens.

The mean sphere and/or the mean cylinder increase function along the sections may be different depending on the position of said section along the meridian line.

In particular, the mean sphere and/or the mean cylinder increase function along the sections are unsymmetrical. For example, the mean sphere and/or the mean cylinder increase function are unsymmetrical along vertical and/or horizontal section in standard wearing conditions.

At least one optical element 14, has an optical function of not focusing an image on the retina of the eye of the person when the lens element is worn in standard wearing conditions.

Advantageously, such optical function of the optical element combined with a refraction area having at least one refractive power different from the refractive power of the prescription allows slowing down the progression of the abnormal refraction of the eye of the person wearing the lens element.

The optical elements may be as represented on figure 1, non-contiguous optical elements.

In the sense of the invention two optical elements are non-contiguous if for all the paths linking the two optical elements one may measure at least along part of each path the refractive power based on a prescription for the eye of the person.

When the two optical elements are on a spherical surface, the two optical elements are non-contiguous if there for all the paths linking the two optical elements one may measure at least along part of each path the curvature of said spherical surface.

According to the invention, the optical elements have an optical function of focusing an image on a position other than the retina.

Preferably, at least 50%, for example at least 80%, for example all, of the optical elements have an optical function of focusing an image on a position other than the retina.

According to an embodiment of the invention, at least one of the optical elements has a non-spherical optical function.

Preferably at least 50%, for example at least 80%, for example all, of the optical elements 14 have a non-spherical optical function.

In the sense of the invention, a "non-spherical optical function" is to be understood as not having a single focus point.

The at least one element having a non-spherical optical function is transparent.

According to an embodiment of the invention, the lens element may comprise an ophthalmic lens bearing the refraction area and a clip-on bearing the plurality of at least three optical elements adapted to be removably attached to the ophthalmic lens when the lens element is worn. Advantageously, when the person is in a far distance environment, outside for example, the person may separate the clip-on from the ophthalmic lens and eventually substitute a second clip-on free of any of at least three optical elements. For example, the second clip-on may comprise a solar tint. The person may also use the ophthalmic lens without any additional clip-on.

The optical element may be added to the lens element independently on each surface of the lens element.

One can add these optical elements on a defined array like square or hexagonal or random or other.

The optical element may cover specific zones of the lens element, like at the center or any other area.

The optical element density or the quantity of power may be adjusted depending on zones of the lens element. Typically, the optical element may be positioned in the periphery of the lens element, in order to increase the effect of the optical element on myopia control, so as to compensate peripheral defocus due to the peripheral shape of the retina for example.

The optical elements can be made using different technologies like direct surfacing, molding, casting or injection, embossing, filming, additive manufacturing, or photolithography etc...

According to an embodiment of the invention, at least one, for example all, of the optical elements has a shape configured so as to create a caustic in front of the retina of the eye of the person. In other words, such optical element is configured so that every section plane where the light flux is concentrated if any, is located in front of the retina of the eye of the person.

According to an embodiment of the invention, the at least one, for example all, of the optical element having a non-spherical optical function is a multifocal refractive micro-lens.

In the sense of the invention, an optical element is "multifocal refractive micro-lens" includes bifocals (with two focal powers), trifocals (with three focal powers), progressive addition lenses, with continuously varying focal power, for example aspherical progressive surface lenses.

According to an embodiment of the invention, the at least one multifocal refractive micro-lens has a toric surface.

A toric surface is a surface of revolution that can be created by rotating a circle or arc about an axis of revolution (eventually positioned at infinity) that does not pass through its center of curvature.

Toric surface lenses have two different radial profiles at right angles to each other, therefore producing two different focal powers.

Toric and spheric surface components of toric lenses produce an astigmatic light beam, as opposed to a single point focus.

According to an embodiment of the invention, the at least one of the optical element having a non-spherical optical function, for example all, of the optical elements is a toric refractive micro-lens. For example, a toric refractive micro-lens with a sphere power value greater than or equal to 0 diopter ($\delta$) and smaller than or equal to +5 diopters ($\delta$), and cylinder power value greater than or equal to 0.25 Diopter ($\delta$).

As a specific embodiment, the toric refractive microlens may be a pure cylinder, meaning that minimum meridian line power is zero, while maximum meridian line power is strictly positive, for instance less than 5 Diopters.

According to an embodiment of the invention, at least one, for example all, of the optical element, is made of a birefringent material. In other words, the optical element is made of a material having a refractive index that depends on the polarization and propagation direction of light. The birefringence may be quantified as the maximum difference between refractive indices exhibited by the material.

According to an embodiment of the invention, at least one, for example all of the optical element, has discontinuities, such as a discontinuous surface, for example Fresnel surfaces and/or having a refractive index profile with discontinuities.

Figure 3 represents an example of a Fresnel height profile of a optical element that may be used for the invention.

According to an embodiment of the invention, at least one, for example all of the optical element, is made of a diffractive lens.

Figure 4 represents an example of a diffractive lens radial profile of an optical element that may be used for the invention.

At least one, for example all, of the diffractive lenses may comprise a metasurface structure as disclosed in WO2017/176921.

The diffractive lens may be a Fresnel lens whose phase function $\psi(r)$ has $\pi$ phase jumps at the nominal wavelength, as seen in Figure 5. One may give these structures the name "$\pi$-Fresnel lenses" for clarity's sake, as opposition to unifocal Fresnel lenses whose phase jumps are multiple values of $2\pi$. The $\pi$-Fresnel lens whose phase function is displayed in Figure 5 diffracts light mainly in two diffraction orders associated to dioptric powers 0 $\delta$ and a positive one P, for example3 $\delta$.

According to an embodiment of the invention, at least one, for example all of the optical element, is a multifocal binary component.

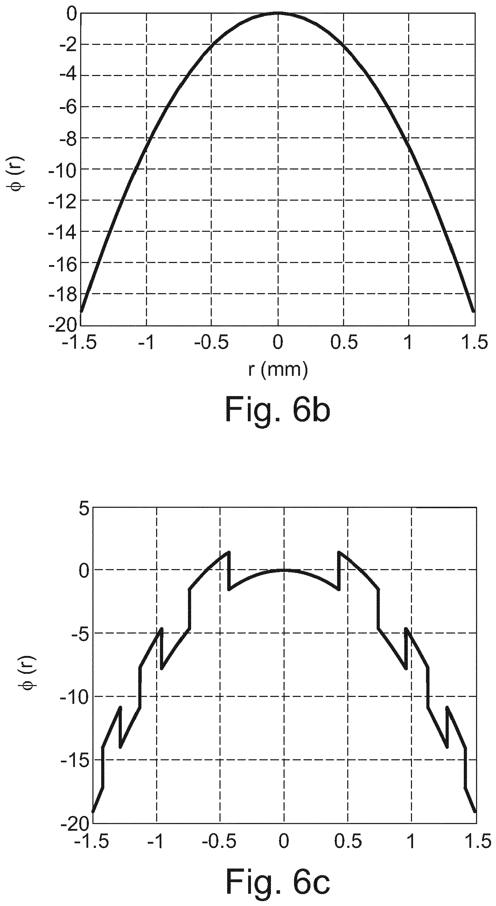

For example, a binary structure, as represented in Figure 6a, displays mainly two dioptric powers, denoted -P/2 and P/2. When associated to a refractive structure as shown in Figure 6b, whose dioptric power is P/2, the final structure represented in Figure 6c has dioptric powers 0 $\delta$ and P. The illustrated case is associated to P=3 $\delta$.

According to an embodiment of the invention, at least one, for example all of the optical element, is a pixelated lens. An example of multifocal pixelated lens is disclosed in Eyal Ben-Eliezer et al, APPLIED OPTICS, Vol. 44, No. 14, 10 May 2005.

According to an embodiment of the invention, at least one, for example all of the optical element, has an optical function with high order optical aberrations. For example, the optical element is a micro-lens composed of continuous surfaces defined by Zernike polynomials.

The invention has been described above with the aid of embodiments without limitation of the general inventive concept.

Many further modifications and variations will be apparent to those skilled in the art upon making reference to the foregoing illustrative embodiments, which are given by way of example only and which are not intended to limit the scope of the invention, that being determined solely by the appended claims.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the invention.

**Claims**

1. A lens element (10) intended to be worn in front of an eye of a person comprising:

   - a refraction area (12) comprising an optical center and having a refractive power based on a prescription for said eye of the person; and
- a plurality of at least three optical elements (14) having an optical function of focusing an image other than on the retina of the eye of the person when the lens element is worn in standard wearing conditions, the areas formed by said plurality of at least three optical elements (14) being complementary to the refraction area, wherein for every circular zone having a radius comprised between 4 and 8 mm comprising a geometrical center located at a distance of the optical center of the lens element (10) greater or equal to said radius + 5mm, the ratio between the sum of areas of the parts of optical elements (14) located inside said circular zone and the area of said circular zone is comprised between 20% and 70%,

wherein the optical elements (14) are configured so that along any section passing through the optical center of the lens element the mean sphere of the optical elements increases from the optical center towards the peripheral part of the lens, and wherein the optical elements (14) are micro-lenses having a contour shape being inscribable in a circle having a diameter greater than or equal to 0.8 mm and smaller than or equal to 3.0 mm, and wherein the standard wearing conditions are defined by a pantoscopic angle of -8°, a Cornea to lens distance of 12 mm, a Pupil-cornea distance of 2 mm, a CRE to pupil distance of 11.5 mm, a CRE to lens distance of 25.5 mm and a wrap angle of 0°.

2. The lens element according to claim 1, wherein the optical elements (14) are configured so that along at least one section of the lens element (10), the mean cylinder of optical elements increases from a point of said section towards the peripheral part of said section.

3. The lens element according to claim 2, wherein the mean sphere and/or the mean cylinder of optical elements (14) increases from a first point of said section towards the peripheral part of said section and decreases from a second point of said section towards the peripheral part of said section, the second point being closer to the peripheral part of said section than the first point.

4. The lens element according to any of the preceding claims, wherein the optical elements (14) are configured so that along at least one section of the lens element (10) the mean sphere and/or the mean cylinder of optical elements increases from the center of said section towards the peripheral part of said section.

5. The lens element according to any of the preceding claims, wherein the optical elements are configured so that along any section passing through the optical center of the lens element (10) the mean cylinder of the optical elements (14) increases from the optical center towards the peripheral part of the lens.

6. The lens element according to any of claims 1 to 4, wherein the refraction area (12) comprises a progressive addition lens design including a far vision reference point,
a near vision reference point and a meridian line joining the far and near vision reference points, the optical elements (14) are configured so that in standard wearing conditions along any horizontal section of the lens the mean sphere and/or the mean cylinder of the optical elements increases from the intersection of said horizontal section with the meridian line towards the peripheral part of the lens element (10).

7. The lens element according to claim 6, wherein the mean sphere and/or the mean cylinder increase function along the sections are different depending on the position of said section along the meridian line.

8. The lens element according to claims 6 or 7, wherein the mean sphere and/or the mean cylinder increase function along the sections are unsymmetrical.

9. The lens element according to any of the preceding claims, wherein the optical elements (14) are configured so that in standard wearing condition the at least one section is a horizontal section.

10. The lens element according to claim 9, wherein the mean sphere and/or the mean cylinder increase function along the at least one horizontal section is a Gaussian function.

11. The lens element according to claim 9, wherein the mean sphere and/or the mean cylinder increase function along the at least one horizontal section is a Quadratic function.

12. The lens element according to any of the preceding claims, wherein the optical elements (14) are spherical micro-lenses.

13. The lens element according to any of the preceding claims, wherein the least three optical elements (14) are non-contiguous.

**Patentansprüche**

1. Linsenelement, das dafür (10) vorgesehen ist, vor einem Auge einer Person getragen zu werden, umfassend:

   - eine Refraktionsfläche (12), die ein optisches Zentrum umfasst und eine Brechkraft aufweist, die auf Rezeptdaten für das Auge der Person beruhen; und
   - eine Vielzahl von mindestens drei optischen Elementen (14), die eine optische Funktion zum Fokussieren eines Bildes an einem anderen Ort als auf der Netzhaut des Auges der Person aufweisen, wenn das Linsenelement unter Standardtragebedingungen getragen wird, wobei die Flächen, die durch die Vielzahl von mindestens drei optischen Elementen (14) gebildet werden komplementär zu der Refraktionsfläche sind,

   wobei für jede kreisförmige Zone, die einen Radius aufweist, der zwischen 4 und 8 mm liegt, und die ein geometrisches Zentrum umfasst, das in einem Abstand von dem optischen Zentrum des Linsenelements (10) von mehr als oder gleich dem Radius + 5 mm angebracht ist, das Verhältnis zwischen der Summe von Flächen der Teile der optischen Elemente (14), die innerhalb der kreisförmigen Zone angebracht sind, und der Fläche der kreisförmigen Zone zwischen 20% und 70% liegt,

   wobei die optischen Elemente (14) so konfiguriert sind, dass die mittlere Sphäre der optischen Elemente entlang jedes Abschnitts, der das optische Zentrum des Linsenelements durchquert, von dem optischen Zentrum in Richtung auf den peripheren Anteil der Linse zunimmt, und
   wobei die optischen Elemente (14) Mikrolinsen sind, die eine Umrissform aufweisen, die in einen Kreis einschreibbar ist, der einen Durchmesser aufweist, der größer als oder gleich 0,8 mm und kleiner als oder gleich 3,0 mm ist, und
   wobei die Standardtragebedingungen durch einen pantoskopischen Winkel von -8°, einen Abstand von der Hornhaut zur Linse von 12 mm, einen Abstand von der Pupille zur Hornhaut von 2 mm, einen Abstand von dem CRE zur Pupille von 11,5 mm, einem Abstand von dem CRE zur Linse von 25,5 mm und einem Fassungsscheibenwinkel von 0° definiert sind.

2. Linsenelement nach Anspruch 1, wobei die optischen Elemente (14) so konfiguriert sind, dass der mittlere Zylinder der optischen Elemente entlang mindestens eines Abschnitts des Linsenelements (10) von einem Punkt des Abschnitts in Richtung auf den peripheren Anteil des Abschnitts zunimmt.

3. Linsenelement nach Anspruch 2, wobei die mittlere Sphäre und/oder der mittlere Zylinder der optischen Elemente (14) von einem ersten Punkt des Abschnitts in Richtung auf einen peripheren Teil des Abschnitts zunimmt und von einem zweiten Punkt des Abschnitts in Richtung auf den peripheren Teil des Abschnitts abnimmt, wobei der zweite Punkt näher an dem peripheren Teil des Abschnitts liegt als der erste Punkt.

4. Linsenelement nach einem der vorhergehenden Ansprüche, wobei die optischen Elemente (14) so konfiguriert sind, dass die mittlere Sphäre und/oder der mittlere Zylinder der optischen Elemente entlang mindestens eines Abschnitts der Linse (10) von dem Zentrum des Abschnitts in Richtung auf den peripheren Anteil des Abschnitts zunehmen.

5. Linsenelement nach einem der vorhergehenden Ansprüche, wobei die optischen Elemente so konfiguriert sind, dass der mittlere Zylinder der optischen Elemente (14) entlang jedes Abschnitts, der das optische Zentrum des Linsenelements (10) durchquert, von dem optischen Zentrum in Richtung auf den peripheren Anteil der Linse zunimmt.

6. Linsenelement nach einem der Ansprüche 1 bis 4, wobei die Refraktionsfläche (12) ein Gleitsichtglasprofil umfasst, das einen Fernsichtbezugspunkt, einen Nahsichtbezugspunkt und eine Meridianlinie beinhaltet, die den Fern- und den Nahsichtbezugspunkt verbindet, wobei die optischen Elemente (14) so konfiguriert sind, dass die mittlere Sphäre und/oder der mittlere Zylinder der optischen Elemente unter Standardtragebedingungen entlang eines horizontalen Abschnitts der Linse von dem Schnittpunkt des horizontalen Abschnitts mit der Meridianlinie in Richtung auf einen peripheren Teil des Linsenelements (10) zunehmen.

7. Linsenelement nach Anspruch 6, wobei die Zunahmefunktionen der mittleren Sphäre und/oder des mittleren Zylinders entlang der Abschnitte abhängig von der Position des Abschnitts entlang der Meridianlinie unterschiedlich sind.

8. Linsenelement nach Anspruch 6 oder 7, wobei die Zunahmefunktionen der mittleren Sphäre und/oder des mittleren Zylinders entlang der Abschnitte unsymmetrisch sind.

9. Linsenelement nach einem der vorhergehenden Ansprüche, wobei die optischen Elemente (14) so konfiguriert sind, dass der mindestens eine Abschnitt unter Standardtragebedingungen ein horizontaler Abschnitt ist.

10. Linsenelement nach Anspruch 9, wobei die Zunahmefunktion der mittleren Sphäre und/oder des mittleren Zylinders entlang des mindestens einen horizontalen Abschnitts eine Gauß-Funktion ist.

11. Linsenelement nach Anspruch 9, wobei die Zunahmefunktion der mittleren Sphäre und/oder des mittleren Zylinders entlang des mindestens einen horizontalen Abschnitts eine quadratische Funktion ist.

12. Linsenelement nach einem der vorhergehenden Ansprüche, wobei die optischen Elemente (14) sphärische Mikrolinsen sind.

13. Linsenelement nach einem der vorhergehenden Ansprüche, wobei die mindestens drei optischen Elemente nicht-zusammenhängend (14) sind.


**Revendications**

1. Verre(10) destiné à être porté devant un œil d'une personne comprenant :

   - une zone de réfraction (12) comprenant un centre optique et ayant une puissance réfractive basée sur une prescription pour ledit œil de la personne ; et
   - une pluralité d'au moins trois éléments optiques (14) ayant une fonction optique de focalisation d'une image ailleurs que sur la rétine de l'œil de la personne quand le verre est porté dans des conditions de port classiques, les zones formées par ladite pluralité d'au moins trois éléments optiques (14) étant complémentaires de la zone de réfraction,

   dans lequel, pour chaque zone circulaire ayant un rayon compris entre 4 et 8 mm comprenant un centre géométrique situé à une distance du centre optique du verre (10) supérieure ou égale audit rayon + 5 mm, le rapport entre la somme des aires des parties d'éléments optiques (14) situées à l'intérieur de ladite zone circulaire et l'aire de ladite zone circulaire est compris entre 20 % et 70 %,

   dans lequel les éléments optiques (14) sont configurés de telle sorte que, le long de n'importe quelle section passant par le centre optique du verre, la sphère moyenne des éléments optiques augmente depuis le centre optique vers la partie périphérique du verre, et
   dans lequel les éléments optiques (14) sont des microlentilles ayant une forme de contour qui peut être inscrite dans un cercle ayant un diamètre supérieur ou égal à 0,8 mm et inférieur ou égal à 3,0 mm, et
   dans lequel les conditions de port classiques sont définies par un angle pantoscopique de -8°, une distance de cornée à verre de 12 mm, une distance pupille-cornée de 2 mm, une distance de CRE à pupille de 11,5 mm, une distance de CRE à verre de 25,5 mm et un angle de galbe de 0°.

2. Verre selon la revendication 1, dans lequel les éléments optiques (14) sont configurés de telle sorte que, le long d'au moins une section du verre (10), le cylindre moyen des éléments optiques augmente depuis un point de ladite section vers la partie périphérique de ladite section.

3. Verre selon la revendication 2, dans lequel la sphère moyenne et/ou le cylindre moyen des éléments optiques (14) augmentent depuis un premier point de ladite section vers la partie périphérique de ladite section et diminuent depuis un deuxième point de ladite section vers la partie périphérique de ladite section, le deuxième point étant plus proche de la partie périphérique de ladite section que le premier point.

4. Verre selon l'une quelconque des revendications précédentes, dans lequel les éléments optiques (14) sont configurés de telle sorte que, le long d'au moins une section du verre (10), la sphère moyenne et/ou le cylindre moyen des éléments optiques augmentent depuis le centre de ladite section vers la partie périphérique de ladite section.

**5.** Verre selon l'une quelconque des revendications précédentes, dans lequel les éléments optiques sont configurés de telle sorte que, le long de n'importe quelle section passant par le centre optique du verre (10), le cylindre moyen des éléments optiques (14) augmente depuis le centre optique vers la partie périphérique du verre.

**6.** Verre selon l'une quelconque des revendications 1 à 4, dans lequel la zone de réfraction (12) comprend un profil de verre progressif comportant un point de référence de vision de loin, un point de référence de vision de près, et un méridien reliant les points de référence de vision de loin et de près, les éléments optiques (14) sont configurés de telle sorte que, dans des conditions de port classiques, le long de n'importe quelle section horizontale du verre, la sphère moyenne et/ou le cylindre moyen des éléments optiques augmentent depuis l'intersection de ladite section horizontale avec le méridien vers la partie périphérique du verre (10).

**7.** Verre selon la revendication 6, dans lequel la fonction d'augmentation de la sphère moyenne et/ou du cylindre moyen le long des sections est différente selon la position de ladite section le long du méridien.

**8.** Verre selon la revendication 6 ou 7, dans lequel la fonction d'augmentation de la sphère moyenne et/ou du cylindre moyen le long des sections est asymétrique.

**9.** Verre selon l'une quelconque des revendications précédentes, dans lequel les éléments optiques (14) sont configurés de telle sorte que, dans des conditions de port classiques, l'au moins une section est une section horizontale.

**10.** Verre selon la revendication 9, dans lequel la fonction d'augmentation de la sphère moyenne et/ou du cylindre moyen le long de l'au moins une section horizontale est une fonction gaussienne.

**11.** Verre selon la revendication 9, dans lequel la fonction d'augmentation de la sphère moyenne et/ou du cylindre moyen le long de l'au moins une section horizontale est une fonction quadratique.

**12.** Verre selon l'une quelconque des revendications précédentes, dans lequel les éléments optiques (14) sont des microlentilles sphériques.

**13.** Verre selon l'une quelconque des revendications précédentes, dans lequel les au moins trois éléments optiques (14) ne sont pas contigus.

Fig. 1

Fig. 2

Fig. 3

Fig. 4

Fig. 5

Fig. 6a

Fig. 6b

Fig. 6c

Lens
Astigmatism
Axis

180° )γ 0° Nose 180° )γ 0° Horizontal axis

Right lens Left lens

## Fig. 7a

Surface
Cylinder
Axis

y 180° )γAX 0° x Nose 180° )γAX 0° x Horizontal axis

Surfaces of Right lens Surfaces of Left lens

## Fig. 7b

EP 3 553 594 B1

**EP 3 553 594 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017131567 A
- US 2017184875 A
- EP 3112925 A
- WO 2016107919 A
- WO 2017176921 A

**Non-patent literature cited in the description**

- **EYAL BEN-ELIEZER et al.** *APPLIED OPTICS,* 10 May 2005, vol. 44 (14